# EUROPÄISCHE PATENTSCHRIFT

(11) **EP 2 336 519 B1**
(45) Veröffentlichungstag und Bekanntmachung des Hinweises auf die Patenterteilung: **15.10.2014**
(21) Anmeldenummer: 10173378.0
(22) Anmeldetag: 19.08.2010
(51) Int. Cl.: F02B 37/18, F02B 39/00

(54) **Viergelenk-Koppelgetriebe sowie Abgasturbolader**
Four-joint coupling gear and exhaust turbo charger
Engrenage couplé à quatre articulations et turbosoufflante de gaz d'échappement

(30) Priorität: 15.12.2009 DE 102009054687
(43) Veröffentlichungstag der Anmeldung: 22.06.2011
(73) Patentinhaber: Robert Bosch GmbH, 70442 Stuttgart (DE)
(72) Erfinder: Baeuerle, Michael, 71735, Eberdingen (DE)

(56) Entgegenhaltungen:
- WO-A1-03/029679
- DE-A1- 4 243 448
- DE-A1-102005 028 374
- DE-A1-102007 054 769

## Beschreibung

Die Erfindung betrifft ein Viergelenk-Koppelgetriebe für eine Verstelleinrichtung, insbesondere eines Wastegates eines Abgasturboladers, mit einer mit einem Antrieb wirkverbundenen Antriebschwinge, einer Abtriebschwinge und einer die Antriebschwinge und die Abtriebschwinge wirkverbindenden Koppel. Die Erfindung betrifft weiterhin einen Abgasturbolader.

### Stand der Technik

Abgasturbolader mit einem Wastegate, welches mittels einer Verstelleinrichtung beziehungsweise eines Stellantriebs verstellbar ist, sind aus dem Stand der Technik bekannt. Beispielsweise beschreibt die DE 42 43 448 A1 eine Vorrichtung zur Steuerung der Verdichterleistung eines an einer Brennkraftmaschine angeordneten Abgasturboladers über einen pneumatischen Stellantrieb. Dabei wird letzterer mit einem Stelldruckmittel durch eine separate Stelldruckmittelpumpe versorgt, deren Stelldruck in Abhängigkeit von wenigstens einem Betriebsparameter gesteuert wird. Dabei soll als Stelldruckmittelpumpe eine elektrisch betriebene Luftpumpe vorgesehen sein, deren Antrieb durch ein Steuergerät in Abhängigkeit von wenigstens einem Betriebsparameter gesteuert wird.

Alternativ kann die Ansteuerung des Wastegates jedoch auch mittels eines elektrischen Stellers erfolgen. Gegenüber den bisher verwendeten, vorstehend beschriebenen pneumatischen Stellern sind mit diesen erheblich größere Stellkräfte bereitstellbar. Dabei werden üblicherweise dauerhaft Werte bis etwa 250 N erreicht, welche zum optimierten Dichthalten des Wastegates in dessen geschlossenen Position erforderlich sind. Ist der elektrische Steller ein Drehsteller, so erfolgt die Kraftübertragung häufig über ein Viergelenk-Koppelgetriebe beziehungsweise über einen Viergelenktrieb. Das Viergelenk-Koppelgetriebe verfügt über die Antriebsschwinge, die Abtriebsschwinge und die Koppel, über welche die Antriebsschwinge mit der Abtriebsschwinge wirkverbunden ist. Dabei ist das Viergelenk-Koppelgetriebe üblicherweise derart ausgelegt, dass in der Geschlossenstellung des Wastegates die Antriebsschwinge von einer Strecklage deutlich beabstandet ist, um Verschleiß und Drifterscheinungen in einem Dauerbetrieb des Viergelenk-Koppelgetriebes, der Verstelleinrichtung und/oder des Wastegates ausgleichen zu können. Unter Strecklage ist dabei die Stellung der Antriebsschwinge zu verstehen, bei welcher eine gedachte Gerade zwischen der Antriebslagerstelle und einer Verbindungsstelle zwischen der Antriebsschwinge und der Koppel mit der Koppel beziehungsweise einer gedachten Geraden zwischen den Verbindungspunkten der Koppel mit Antriebsschwinge und Abtriebsschwinge im Wesentlichen fluchtet, also quasi eine Verlängerung für diese darstellt.

Je näher die Stellung der Antriebsschwinge der Strecklage in der Geschlossenstellung des Wastegates ist, umso geringer ist das Drehmoment, welches zum Halten der Geschlossenstellung an der Antriebslagerstelle auf die Antriebsschwinge aufgebracht werden muss. Gleichzeitig wird jedoch der verbleibende Stellweg der Abtriebsschwinge in dem Bereich um diese Stellung sehr gering, so dass - wie bereits vorstehend festgehalten - ein etwaiger Verschleiß (beispielsweise des Wastegates) nicht ausgeglichen werden kann, so dass das Wastegate möglicherweise nicht mehr vollständig geschlossen werden kann.

### Offenbarung der Erfindung

Gegenüber den aus dem Stand der Technik bekannten Viergelenk-Koppelgetrieben weist das Viergelenk-Koppelgetriebe mit den in Anspruch 1 genannten Merkmalen den Vorteil auf, dass zum Halten einer bestimmten Stellung, beispielsweise der Geschlossenstellung des Wastegates, ein kleineres Drehmoment an der Antriebsschwinge angelegt werden muss und gleichzeitig Verschleiß beziehungsweise Alterungserscheinungen des Viergelenk-Koppelgetriebes, der Verstelleinrichtung und/oder des Wastegates ausgleichbar sind. Dies wird erfindungsgemäß erreicht, indem die Antriebsschwinge ein mit dem Antrieb wirkverbundenes Führungselement und ein der Koppel zugeordnetes Verbindungselement aufweist, wobei das Führungselement und das Verbindungselement in einer Verbindungslagerstelle aneinander gelagert und in mindestens einer Fixierstellung mittels einer Fixiervorrichtung zueinander festlegbar sind. Die Antriebsschwinge ist also mehrteilig, insbesondere zweiteilig, ausgebildet. Sie weist das Führungselement und das Verbindungselement auf. Dabei ist das Führungselement mit dem Antrieb wirkverbunden und ist dazu beispielsweise an der Antriebslagerstelle drehbar gelagert. Das Verbindungselement ist dagegen der Koppel zugeordnet. Dazu kann es mit der Koppel verbunden beziehungsweise an dieser gelagert sein. Das Führungselement und das Verbindungselement sind in der Verbindungslagerstelle, insbesondere drehbar, aneinander gelagert, wobei die Verbindungslagerstelle zum Beispiel von der Antriebslagerstelle beabstandet angeordnet ist. Vorzugsweise ist dabei der Abstand zwischen der Antriebslagerstelle und einer Koppellagerstelle, also der Lagerstelle zwischen Antriebsschwinge und Koppel, größer als der Abstand zwischen Antriebslagerstelle und der Verbindungslagerstelle. Das Verbindungselement kann beispielsweise als Exzenter ausgebildet und/oder an der Koppel, insbesondere drehbar, gelagert sein.

Auf diese Weise ist es möglich, das Verstellen der Abtriebsschwinge zunächst mit einem vergleichsweise großen Hebelarm, nämlich dem Hebelarm zwischen Antriebslagerstelle und Koppellagerstelle auszuführen, bis sich die Antriebsschwinge zumindest im Bereich der Strecklage befindet. Dabei muss die Strecklage nicht unmittelbar erreicht sein. Dennoch ist es mit dem erfindungsgemäßen Viergelenk-Koppelgetriebe möglich, die Antriebsschwinge in eine Stellung zu bringen, welche näher an der Strecklage ist, als mit aus dem Stand der Technik bekannten Viergelenk-Koppelgetriebe möglich, wenn Verschleiß beziehungsweise Alterungserscheinungen berücksichtigt werden müssen. Um einen solchen Betrieb des Viergelenk-Koppelgetriebes zu ermöglichen, müssen das Führungselement und das Verbindungselement zueinander festlegbar sein. Zu diesem Zweck ist die Fixiervorrichtung vorgesehen. Mit dieser können das Führungselement und das Verbindungselement in der mindestens einen Fixierstellung zueinander fixiert werden, so dass kein Verlagern, insbesondere Verdrehen, gegeneinander um die Verbindungslagerstelle möglich ist.

Vorzugsweise ist es vorgesehen, dass in der Fixierstellung von Führungselement und Verbindungselement der Hebelweg zwischen Antriebslagerstelle und Koppellagerstelle ausgenutzt wird. Wird das Verlagern beziehungsweise Verdrehen um die Verbindungslagerstelle mittels der Fixiervorrichtung freigegeben, so wird bevorzugt der Hebelweg zwischen Antriebslagerstelle und Verbindungslagerstelle verwendet, um die Koppel und damit die Abtriebsschwinge zu verlagern beziehungsweise zu verstellen. Das Verbindungselement ist dazu inbesondere drehbar an der Koppel gelagert. Vorzugsweise ist die Antriebsschwinge um eine Antriebslagerstelle drehbar gelagert.

Eine Weiterbildung der Erfindung sieht vor, dass Führungselement und Verbindungselement mittels der Fixiervorrichtung außerhalb eines Freigabebereichs um eine Strecklage der Antriebsschwinge festgelegt und/oder innerhalb des Freigabebereichs zueinander verlagerbar sind. Der Freigabebereich ist beispielsweise ein Freigabewinkelbereich, der in einer möglichen Ausführungsform 0° bis 20°, insbesondere 0° bis 10°, umfasst. Befindet sich also zum Beispiel die Antriebsschwinge in einer Stellung - womit eine Drehstellung um die Antriebslagerstelle ausgehend von der Strecklage gemeint ist -, innerhalb des Freigabewinkelbereichs, so wird die Fixiervorrichtung zum Freigeben des Verbindungselements in Bezug auf das Führungselement betätigt. Führungselement und Verbindungselement sind dann relativ zueinander verlagerbar beziehungsweise drehbar. Außerhalb des Freigabebereichs wird die Fixiervorrichtung zum Halten der Fixierstellung verwendet.

Eine Weiterbildung der Erfindung sieht vor, dass die Fixiervorrichtung mindestens ein Rastelement aufweist, welches mit einem Rastgegenelement zusammenwirkt, wobei das Rastelement vorzugsweise an dem Verbindungselement und das Rastgegenelement an dem Führungselement angeordnet sind. Mittels der Fixiervorrichtung ist also eine Rastverbindung zwischen Führungselement und Verbindungselement herstellbar. Diese Rastverbindung sorgt dafür, dass das Führungselement und das Verbindungselement in der mindestens einen Fixierstellung zueinander festgelegt sind. Das Rastelement weist beispielsweise einen Rastvorsprung (Rastnase) auf, welcher mit einer Rastausnehmung zusammenwirkt. Beispielsweise kann das Rastelement beziehungsweise der Rastvorsprung an dem Verbindungselement und die Rastausnehmung an dem Führungselement vorgesehen sein.

Eine Weiterbildung der Erfindung sieht vor, dass das Rastelement in seiner Axialrichtung verlagerbar ist. Die Axialrichtung liegt dabei beispielsweise parallel zu einer Achse des Antriebs beziehungsweise der Antriebslagerstelle, der Verbindungslagerstelle beziehungsweise der Koppelagerstelle vor. Die Axialrichtung liegt dabei in der Richtung vor, in welcher das Rastelement seine größte Erstreckung aufweist. Alternativ kann selbstverständlich auch eine Verlagerung in eine andere Richtung vorgesehen sein. Zum Beispiel kann das Rastelement in radialer Richtung - wiederum bezogen auf die Achse des Antriebs - von dem Rastgegenelement fortgeführt werden. Auf diese Weise kann der Rastvorsprung aus der Rastausnehmung herausgelangen und somit Führungselement und Verbindungselement für eine Bewegung, insbesondere Drehbewegung, gegeneinander freigeben.

Eine Weiterbildung der Erfindung sieht vor, dass dem Rastelement eine Rückstellvorrichtung zugeordnet ist, die eine das Rastelement in seine Rastposition drängende Rückstellkraft bewirkt. Die Rastposition des Rastelements liegt vor, wenn das Führungselement und das Verbindungselement in der Fixierstellung zueinander angeordnet sind. Zum Freigeben der Bewegung, insbesondere Drehbewegung, von Führungselement und Verbindungselement gegeneinander wird das Rastelement aus seiner Rastposition in eine Freigabeposition gebracht. Dies kann beispielsweise durch eine Verlagerung in der Axialrichtung des Rastelements erfolgen. Um das Rastelement wieder in seine Rastposition zu bewegen, ist die Rückstellvorrichtung vorgesehen. Diese bewirkt eine vorzugsweise permanente Rückstellkraft, welche das Rastelement in die Rastposition drängt. Die Rückstellvorrichtung kann beispielsweise als an dem Rastelement angreifendes Federelement vorliegen.

Eine Weiterbildung der Erfindung sieht vor, dass die Fixiervorrichtung von der Koppel betätigbar ist. In Abhängigkeit von der Stellung der Antriebsschwinge beziehungsweise des Antriebs liegt die Koppel in einer bestimmten Relativposition zu dieser vor. Somit können die Fixiervorrichtung und die Koppel derart ausgebildet sein, dass die Koppel die Fixiervorrichtung zum Freigeben einer Verlagerung beziehungsweise eines Verdrehens von Führungselement und Verbindungselement gegeneinander betätigt, sobald sich die Stellung der Antriebsschwinge in dem Freigabebereich beziehungsweise Freigabewinkelbereich befindet. Beispielsweise wird dazu das Rastelement von der Koppel verlagert. Das Betätigen der Fixiervorrichtung beziehungsweise das Verlagern des Rastelements erfolgt also bei einer Stellung der Antriebsschwinge unmittelbar außerhalb des Freigabebereichs, so dass das Rastelement beziehungsweise die Fixiervorrichtung das Führungselement und das Verbindungselement innerhalb des Freigabebereichs zueinander frei gibt.

Eine Weiterbildung der Erfindung sieht vor, dass die Fixiervorrichtung einen Anschlag für die Koppel aufweist. Der Anschlag tritt mit der Koppel in Wirkverbindung, sobald sich die Antriebsschwinge in einer Stellung innerhalb des Freigabebereichs befindet. Der Anschlag bewirkt, dass sich die Koppel hinsichtlich der Fixiervorrichtung nicht mehr weiter bewegen kann. Beispielsweise ist der Anschlag an dem Rastelement des Verbindungselements angeordnet. In diesem Fall wird bei einer Stellung der Antriebsschwinge innerhalb des Freigabebereichs das Verbindungselement bezüglich des Führungselements freigegeben, wobei gleichzeitig die Koppel bezüglich des Verbindungselements durch den Anschlag in zumindest eine Richtung festgesetzt ist. Der Anschlag ist somit ein Endanschlag für die Koppel, welcher eine weitere Verlagerung der Koppel in Richtung des Anschlags verhindert und lediglich eine Bewegung in die umgekehrte Richtung, also von dem Anschlag wegführend zulässt.

Eine Weiterbildung der Erfindung sieht vor, dass das Verbindungselement und die Koppel in einer Koppellagerstelle aneinander gelagert sind, wobei die Koppellagerstelle einen größeren Hebelabstand von der Antriebslagerstelle aufweist als die Verbindungslagerstelle. Auf diese Weise ist es möglich, außerhalb des Freigabebereichs eine Verlagerung der Koppel mit dem größeren Hebelabstand zu bewirken, was eine vergleichsweise große Verlagerung der Koppel mit einer bestimmten Stellungsänderung der Antriebsschwinge um die Antriebslagerstelle herum ermöglicht. Innerhalb des Freigabebereichs liegt jedoch der kleinere Hebelabstand vor, wobei dann der Abstand zwischen der Antriebslagerstelle und der Verbindungslagerstelle den effektiven Hebelabstand darstellt. Auf diese Weise ist zum Einen das Halten der Koppel in der momentanen Stellung mit einem vergleichsweise geringen, auf die Antriebsschwinge wirkenden Drehmoment möglich, während andererseits dennoch Verschleiß und Alterungserscheinungen von Viergelenk-Koppelgetriebe, Verstelleinrichtung beziehungsweise Wastegate und dergleichen ausgeglichen werden können.

Eine Weiterbildung der Erfindung sieht vor, dass eine Auslenkungsbegrenzungsvorrichtung vorgesehen ist, die eine maximale Auslenkung der Koppel festlegt. Um zu verhindern, dass eine Verlagerung bezeihungsweise Drehbewegung des Führungselements um die Antriebslagerstelle innerhalb des Freigabebereichs eine Verlagerung der Koppel anstatt des Verbindungselements zu dem Führungselement zu verhindern, ist die Auslenkungsbegrenzungsvorrichtung vorgesehen. Auf diese Weise wird sichergestellt, dass bei einer Veränderung der Stellung der Antriebsschwinge innerhalb des Freigabebereichs das Verbindungselement in Bezug auf das Führungselement, insbesondere drehend, verlagert wird. So kann auch bei einer schwergängigen Verbindung zwischen Führungselement und Verbindungselement eine ordnungsgemäße Funktion des Viergelenk-Koppelgetriebes sichergestellt werden.

Die Erfindung betrifft weiterhin einen Abgasturbolader mit einem Wastegate und einer Verstelleinrichtung zum Verstellen des Wastegates, wobei die Verstelleinrichtung ein Viergelenk-Koppelgetriebe, insbesondere gemäß den vorstehenden Ausführungen, mit einer mit einem Antrieb wirkverbundenen Antriebsschwinge, einer Abtriebsschwinge und einer die Antriebsschwinge und Abtriebsschwinge wirkverbindenden Koppel, aufweist. Dabei ist vorgesehen, dass die Antriebsschwinge ein mit dem Antrieb wirkverbundenes Führungselement und ein der Koppel zugeordnetes Verbindungselement aufweist, wobei das Führungselement und das Verbindungselement in einer Verbindungslagerstelle aneinander gelagert und in mindestens einer Fixierstellung mittels einer Fixiervorrichtung zueinander festlegbar sind.

Das vorstehend beschriebene Viergelenk-Koppelgetriebe kann besonders bevorzugt in Verbindung mit dem Wastegate des Abgasturboladers verwendet werden. Es ermöglicht die Übertragung einer großen Stellkraft über die Koppel und gleichzeitig das Halten der Abtriebsschwinge in einer bestimmten Stellung (entsprechend der Geschlossenstellung des Wastegates) mit geringem Kraftaufwand. Dabei ist es weiterhin möglich, Verschleiß und Alterungserscheinungen des Wastegates beziehungsweise der Verstelleinrichtung auszugleichen. Die erstgenannten Vorteile können bei Verstelleinrichtungen beziehungsweise Viergelenk-Koppelgetrieben nur dann erreicht werden, wenn sich die Antriebsschwinge in der vorstehend erläuterten Strecklage befindet. In dieser Strecklage ist jedoch der maximale Stellweg der Koppel bei aus dem Stand der Technik bekannten Viergelenk-Koppelgetrieben erschöpft beziehungsweise vollständig genutzt, so dass eine weitere Verlagerung der Abtriebsschwinge nicht mehr möglich ist. Sollte eine solche weitere Verlagerung bedingt durch Verschleiß beziehungsweise Alterungserscheinungen zum Verschließen des Wastegates notwendig sein, so kann diese nicht durchgeführt werden, woraufhin das Wastegate nicht mehr vollständig geschlossen werden kann.

Die Erfindung wird im Folgenden anhand der in der Zeichnung dargestellten Ausführungsbeispiele näher erläutert, ohne dass eine Beschränkung der Erfindung erfolgt. Es zeigen:
- Figur 1: eine schematische Darstellung eines Viergelenk-Koppelgetriebes, wobei sich die Antriebsschwinge in einer Strecklage befindet,
- Figur 2: einen Bereich des Viergelenk-Koppelgetriebes um die Antriebs- schwinge, wobei diese ein Führungselement und ein Verbindungs- element aufweist, die in einer Verbindungslagerstelle drehbar anein- ander gelagert sind, in einer ersten Stellung,
- Figur 3: das Viergelenk-Koppelgetriebe in einer zweiten Stellung, unmittelbar außerhalb eines Freigabebereichs,
- Figur 4: das Viergelenk-Koppelgetriebe in einer dritten Stellung innerhalb des Freigabebereichs,
- Figur 5: das Viergelenk-Koppelgetriebe, wobei eine Auslenkungsbegren- zungsvorrichtung zum Begrenzen einer maximalen Auslenkung einer mit dem Verbindungselement verbundenen Koppel vorgesehen ist,
- Figur 6: eine Detailansicht der Antriebsschwinge,
- Figur 7: eine Detailschnittansicht der Antriebsschwinge, und
- Figur 8: eine weitere Detailansicht der Antriebsschwinge.

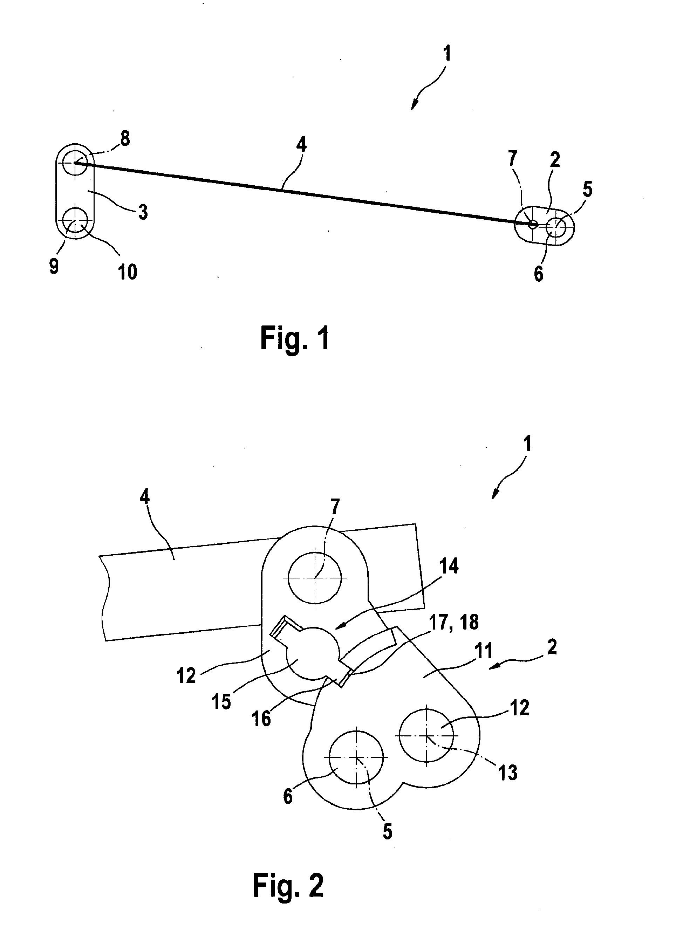

Die Figur 1 zeigt eine schematische Ansicht eines Viergelenk-Koppelgetriebes 1, wie es beispielsweise für eine hier nicht dargestellt Verstelleinrichtung eines Wastegates eines Abgasturboladers verwendet wird. Die Verstelleinrichtung ist dabei eine elektrisch betätigte Stelleinrichtung, verfügt also über einen elektrischen Steller beziehungsweise elektrischen Antrieb. Das Viergelenk-Koppelgetriebe 1 weist eine Antriebsschwinge 2, eine Abtriebsschwinge 3 und eine die Antriebsschwinge 2 mit der Abtriebsschwinge 3 wirkverbindende Koppel 4 auf. Die Antriebsschwinge 2 ist dabei um eine Antriebslagerstelle 5 drehbar gelagert. An dieser Antriebslagerstelle 5 ist sie mit einem hier nicht dargestellten Antrieb über eine Antriebswelle 6 wirkverbunden. Die Koppel 4 ist an einer Koppellagerstelle 7 drehbar an der Antriebsschwinge 2 gelagert. An der Abtriebsschwinge 3 ist eine weitere Koppellagerstelle 8 vorgesehen, in welcher die Koppel 4 an der Abtriebsschwinge 3 drehbar gelagert ist. Die Abtriebsschwinge 3 ist um eine Abtriebslagerstelle 9 drehbar gelagert und dazu vorzugsweise auf einer Abtriebswelle 10 befestigt. Über die Abtriebswelle 10 ist eine Wirkverbindung zwischen der Abtriebsschwinge 3 und dem Wastegate des Abgasturboladers hergestellt. Das Viergelenk-Koppelgetriebe 1, welches hier dargestellt ist, ist also Bestandteil der Verstelleinrichtung des Wastegates.

Die Antriebsschwinge 2 ist in der Figur 1 in einer Stellung dargestellt, welche einer Strecklage entspricht. In dieser bildet eine gedachte Gerade zwischen der Antriebslagerstelle 5 und der Koppellagerstelle 7 im Wesentlichen eine Verlängerung einer gedachten Geraden zwischen den Koppellagerstellen 7 und 8. Die Abtriebsschwinge 3 liegt dabei in einer Position vor, in welcher sich das Wastegate des Abgasturboladers in seiner Geschlossenstellung befindet. Die dargestellte Stellung der Abtriebsschwinge 3 kann daher auch als Geschlossenstellung bezeichnet werden. Soll die Abtriebsschwinge 3 in dieser Stellung gehalten werden, so ist die dargestellte Strecklage der Antriebsschwinge 2 besonders vorteilhaft, da in dieser das auf die Antriebswelle 6 aufzubringende Drehmoment sehr klein beziehungsweise im Idealfall gleich Null ist. Es ist somit mit einem sehr geringen Energieaufwand möglich, die Abtriebsschwinge 3 in der Geschlossenstellung zu halten.

Es ist jedoch offensichtlich, dass in der Strecklage der Antriebsschwinge 2 der Verstellweg der Koppel 4 erschöpft ist. Es ist also keine weitere Verstellung der Abtriebsschwinge 3 in Richtung der Geschlossenstellung beziehungsweise über diese hinaus möglich. Bedingt durch Verschleiß oder Alterungserscheinungen kann dies jedoch notwendig sein, um ein sicheres Schließen des Wastegates zu realisieren. Wird das Viergelenk-Koppelgetriebe 1 also derart ausgelegt, dass es bereits ohne das Auftreten von Verschleiß beziehungsweise Alterungserscheinungen notwendig ist, die Antriebsschwinge 2 in die Strecklage zu bringen, um die Abtriebsschwinge 3 in ihre Geschlossenstellung zu verlagern, so ist das Berücksichtigen des angeführten Verschleißes beziehungsweise der Alterungserscheinungen nicht mehr möglich. Das Wastegate kann somit bei deren Auftreten nicht mehr vollständig verschlossen werden und ist undicht.

Die aus dem Stand der Technik bekannten Viergelenk-Koppelgetriebe 1 sind daher derart ausgelegt, dass bei Erreichen der Geschlossenstellung die Stellung der Antriebsschwinge 2 deutlich von der Strecklage verschieden ist. Somit ist jedoch das Aufbringen eines vergleichsweise hohen Drehmoments auf die Antriebsschwinge 2 über die Antriebswelle 6 notwendig, um die Abtriebsschwinge 3 in der Geschlossenstellung zu halten.

Aus diesem Grund wird die Antriebsschwinge 2 des Viergelenk-Koppelgetriebes 1 mehrteilig ausgebildet, wie dies in der Figur 2 dargestellt ist. Die Antriebsschwinge 2 weist dabei ein Führungselement 11 und ein als Exzenter ausgebildetes Verbindungselement 12 auf. Das Führungselement 11 ist mit dem Antrieb beziehungsweise der Antriebswelle 6 an der Antriebslagerstelle 5 wirkverbunden. Dagegen weist das Verbindungselement 12 die Koppellagerstelle 7 auf, an welcher er an der Koppel 4 drehbar gelagert ist. Führungselement 11 und Verbindungselement 12 sind an einer Verbindungslagerstelle 13 zueinander drehbar gelagert. Weiterhin ist eine Fixiervorrichtung 14 mit einem Rastelement 15 vorgesehen. Dieses Rastelement 15 verfügt über einen Rastvorsprung 16, der in eine Rastausnehmung 17 eingreift. In der dargestellten Ausführungsform ist das Rastelement 15 dem Verbindungselement 12 und die Rastausnehmung 17, welche ein Rastgegenelement 18 darstellt oder von diesem ausgebildet wird, dem Führungselement 11 zugeordnet.

Die Fixiervorrichtung 14 kann das Führungselement 11 und das Verbindungselement 12 in einer Fixierstellung (wie in der Figur 2 gezeigt) festlegen. Die Fixiervorrichtung 14 kann jedoch auch derart eingestellt werden, dass sie die Drehbewegung von Führungselement 11 und Verbindungselement 12 um die Verbindungslagerstelle 13 freigibt. Dabei ist es vorgesehen, dass die Fixiervorrichtung 14 Führungselement 11 und Verbindungselement 12 zueinander festlegt, wenn sich die Antriebsschwinge 2 in einer Stellung außerhalb eines Freigabebereichs, der hier ein Freigabewinkelbereich ist, befindet. Die Stellung der Antriebsschwinge 2 ist dabei ausgehend von der Strecklage der Antriebsschwinge 2, wie in Figur 1 gezeigt, definiert und bezieht sich auf eine Drehbewegung der Antriebsschwinge 2 um die Antriebslagerstelle 5. Ist die Stellung der Antriebsschwinge 2 innerhalb des Freigabewinkelbereichs, so wird die Fixiervorrichtung 14 zum Freigeben der Drehbewegung von Führungselement 11 und Verbindungselement 12 eingestellt. Der Freigabewinkel liegt beispielsweise in einem Bereich von 0° bis 20° (bezogen jeweils auf die Stellung beziehungsweise Winkelstellung der Antriebsschwinge 2 um die Antriebslagerstelle 5, ausgehend von der Strecklage) vor.

Das Rastelement 15 ist zum Freigeben der Drehbewegung in seine Axialrichtung verlagerbar. Die Axialrichtung steht in der hier dargestellten Ausführungsform senkrecht zur Zeichenebene. Zum Freigeben wird das Rastelement 15 aus der Zeichenebene in Richtung des Betrachters verlagert. Nicht dargestellt ist hier, dass dem Rastelement 15 eine Rückstellvorrichtung 19 in Form einer Spiralfeder 20 zugeordnet ist. Die Rückstellvorrichtung 19 bewirkt eine Rückstellkraft, die das Rastelement 15 in Richtung seiner Rastposition drängt. Die Fixiervorrichtung 14 ist dabei derart ausgebildet, dass sie von der Koppel 4 betätigbar ist. Das bedeutet, dass das das Verlagern des Rastelements 15 in axialer Richtung durch Berührkontakt zwischen dem Rastelement 15 und der Koppel 4 bewirkt wird. Jeder Stellung der Antriebsschwinge 2 ist eine bestimmte Stellung der Koppel 4 zuordenbar. Aus diesem Grund können das Rastelement 15 und die Koppel 4 derart aufeinander abgestimmt sein, dass das Rastelement 15 unmittelbar bei dem Erreichen einer Stellung im Bereich des Freigabewinkelbereichs durch die Antriebsschwinge 2 das Rastelement 15 in seiner Axialrichtung ausgelenkt wird, um so in eine Freigabeposition zu gelangen, in welcher das Führungselement 11 und das Verbindungselement 12 um die Verbindungslagerstelle 13 gegeneinander verdrehbar sind. In der Figur 2 liegt die Antriebsschwinge 2 in einer ersten Stellung außerhalb des Freigabewinkelbereichs vor. Aus diesem Grund sitzt der Rastvorsprung 16 in der Rastausnehmung 17 zum Festlegen des Führungselements 11 in Bezug auf das Verbindungselement 12 ein. Die Koppel 4 wird folglich über einen Hebelabstand durch das an der Antriebsschwinge 2 aufgebrachte Drehmoment kraftbeaufschlagt, der dem Abstand zwischen der Antriebslagerstelle 5 und der Koppellagerstelle 7 entspricht.

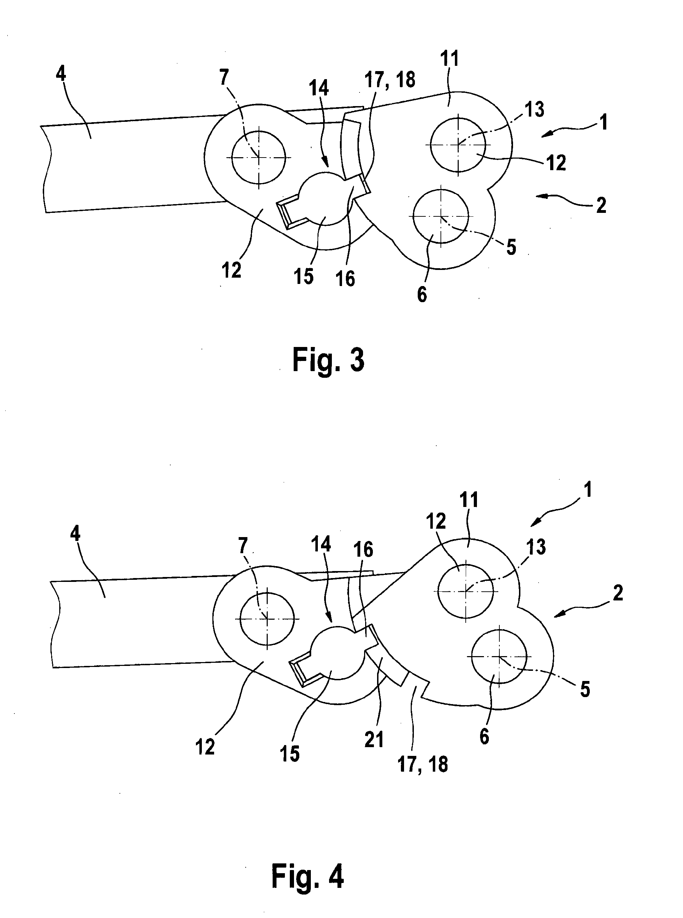

Die Figur 3 zeigt das Viergelenk-Koppelgetriebe 1 in einer zweiten Stellung, wobei die Antriebsschwinge 2 eine Stellung einnimmt, welche gerade außerhalb des Freigabewinkelbereichs liegt. Es wird deutlich, dass sich die Koppel 4 nun in einer Stellung befindet, in welcher sie mit dem Rastelement 15 in Wirkverbindung treten kann, um diesen aus seiner Rastposition in seine Freigabeposition zu bringen, wenn die Antriebsschwinge 2 weiter in Richtung der Strecklage verlagert wird. Es wird auch deutlich, dass die Antriebsschwinge 2 nahezu in der Strecklage vorliegt.

Eine weitere Verlagerung der Antriebsschwinge 2 wird anhand der Figur 4 verdeutlicht. In dieser liegt das Viergelenk-Koppelgetriebe 1 in einer dritten Stellung vor, wobei sich die Stellung der Antriebsschwinge 2 innerhalb des Freigabewinkelbereichs befindet. Es ist zu erkennen, dass das Rastelement 15 axial aus der Zeichenebene herausverlagert wurde, so dass es nun auf einer Gleitfläche 21 des Führungselements 11 geführt ist. Durch diese Verlagerung in seine Freigabeposition sind Führungselement 11 und Verbindungselement 12 nicht mehr gegeneinander festgesetzt, sondern können um die Verbindungslagerstelle 13 eine Drehbewegung relativ zueinander durchführen. Es wird auch deutlich, dass sich die Koppel 4 in der in der Figur 4 dargestellten Stellung des Viergelenk-Koppelgetriebes 1 relativ zu dem Rastelement 15 in derselben Position befindet, wie für die in der Figur 3 dargestellte Stellung des Viergelenk-Koppelgetriebes 1. Dies wird durch einen hier nicht dargestellten Anschlag 22 der Fixiervorrichtung 14 beziehungsweise des Rastelements 15 erreicht, welcher mit der Koppel 4 in Kontakt tritt und somit als Endanschlag für eine Verlagerung von Koppel 4 und Rastelement 15 zueinander dient.

Liegt die Stellung der Antriebsschwinge 2 innerhalb des Freigabewinkelbereichs, erfolgt also keine oder lediglich nur noch eine geringe Verlagerung von Koppel 4 und Verbindungselement 12 zueinander, sondern vielmehr eine Verlagerung von Führungselement 11 und Verbindungselement 12 um die Verbindungslagerstelle 13. Somit wird sozusagen von dem Hebelabstand zwischen Antriebslagerstelle 5 und Koppellagerstelle 7 (außerhalb des Freigabewinkelbereichs) und dem Hebelabstand zwischen Antriebslagerstelle 5 und Verbindungslagerstelle 13 (innerhalb des Freigabewinkelbereichs) umgeschaltet. Das bedeutet, dass innerhalb des Freigabewinkelbereichs ein kleinerer effektiver Hebelabstand vorliegt, so dass die Koppel 4 mit geringem Kraftaufwand gehalten werden kann, um die Abtriebsschwinge 3 in ihrer Geschlossenstellung zu sichern. Auf diese Weise ist insbesondere eine Kraft- beziehungsweise Wegumkehr, wie sie bei aus dem Stand der Technik bekannten Ausführungsformen auftreten kann, auch bei zunehmendem Verschleiß der Verstelleinrichtung beziehungsweise des Wastegates des Abgasturboladers vermieden. Dadurch kann die strecklagentypische Kraftverstärkung des Viergelenk-Koppelgetriebes 1 beziehungsweise eines Kniehebeltriebs nahezu vollständig genutzt werden und dennoch ein Erreichen der Geschlossenstellung durch das Wastegate sichergestellt werden.

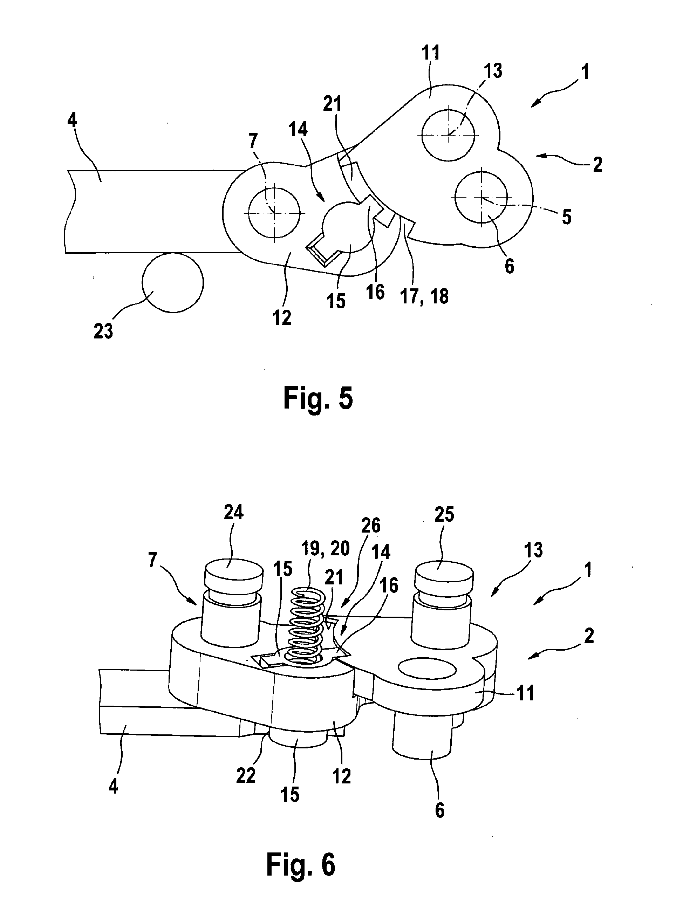

Die Figur 5 zeigt das Viergelenk-Koppelgetriebe 1, wobei sich die Antriebsschwinge 2 in einer Stellung befindet, die zwischen den in den Figuren 3 und 4 dargestellten Stellungen liegt. Anhand der Figur 5 wird verdeutlicht, dass beispielsweise aufgrund einer schwergängigen Lagerung an der Verbindungslagerstelle 13 bei einem Verstellen der Antriebsschwinge 2 kein Verdrehen von Führungselement 11 und Verbindungselement 12 abläuft, sondern vielmehr lediglich eine Verlagerung der Koppel 4. Diese Verlagerung wird mittels einer Auslenkungsbegrenzungsvorrichtung 23 verhindert. Diese dient der Festlegung einer maximalen Auslenkung der Koppel 4. Sobald die Koppel 4 an der Auslenkungsbegrenzungsvorrichtung 23 anliegt, ist lediglich eine Bewegung der Koppel 4 möglich, die auch zu einer Betätigung der Abtriebsschwinge 3 führt. Eine weitere Verlagerung der Koppel 4 in Richtung der Auslenkungsbegrenzungsvorrichtung 23, die nicht in einer Betätigung der Abtriebsschwinge 3 resultiert, wird vermieden.

Die Figur 6 zeigt eine Detailansicht der Antriebsschwinge 2 des Viergelenk-Koppelgetriebes 1. Dargestellt sind das Führungselement 11, das Verbindungselement 12, die Antriebswelle 6, die Koppel 4 und die Fixiervorrichtung 14 mit der als Spiralfeder 20 ausgebildeten Rückstellvorrichtung 19. Es ist zu erkennen, dass an der Koppellagerstelle 7 und der Verbindungslagerstelle 13 jeweils Zapfen 24 beziehungsweise 25 vorgesehen sind, um die drehbewegliche Lagerung des Verbindungselements 12 an der Koppel 4 beziehungsweise des Verbindungselements 12 an dem Führungselement 11 zu realisieren. Es wird auch deutlich, dass die Gleitfläche 21 in einer Führungsausnehmung 26 vorliegt.

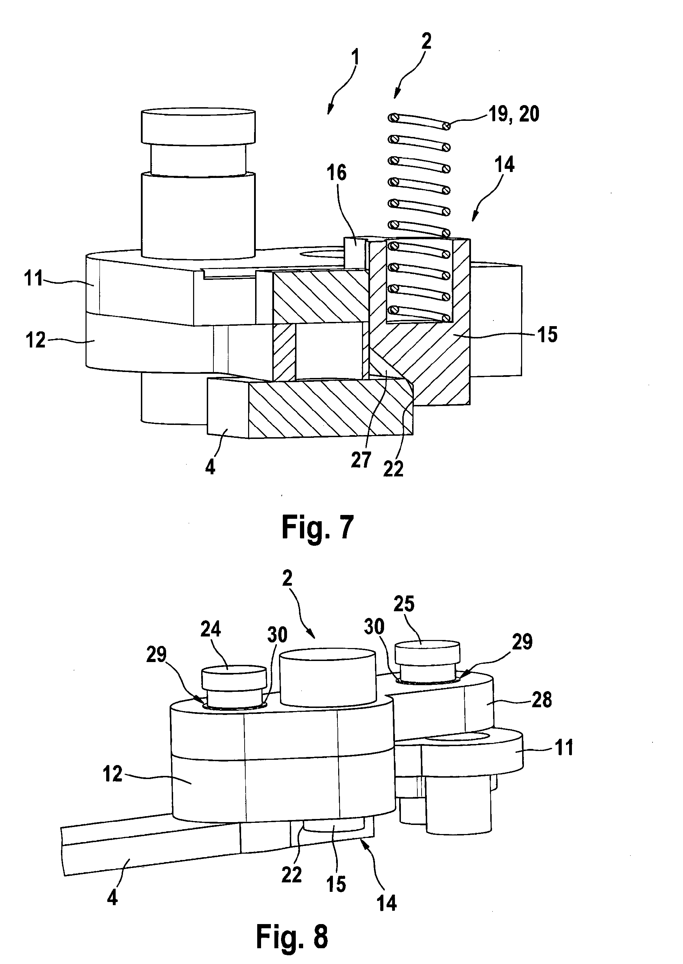

Die Figur 7 zeigt das Viergelenk-Koppelgetriebe 1 in einer geschnittenen Detailansicht. In dieser Darstellung wird deutlich, dass das Rastelement 15 den Anschlag 22 aufweist. Oberhalb des Anschlags 22 ist an dem Rastelement 15 eine Führungsschräge 27 vorgesehen, mit welcher das Verlagern des Rastelements 15 in seiner axialen Richtung bei Berührkontakt mit der Koppel 4 bewerkstelligt ist. Das Rastelement 15 liegt in der Figur 7 in seiner Freigabeposition vor, ist also bereits in Axialrichtung verlagert. Nachfolgend dieser Verlagerung wirkt der Anschlag 22 derart mit der Koppel 4 zusammen, dass keine oder lediglich eine geringe Relativbewegung zwischen Verbindungselement 12 und Koppel 4 bei einer weiteren Betätigung der Antriebsschwinge 2 in Richtung der Strecklage durchgeführt wird.

Die Figur 8 zeigt eine weitere Detailansicht des Viergelenk-Koppelgetriebes 1. Es ist erkennbar, dass eine Abdeckung 28 oberhalb von Führungselement 11 und Verbindungselement 12 angebracht ist. Die Abdeckung 28 weist zwei Ausnehmungen 29 auf, welche von den Zapfen 24 und 25 durchgriffen werden. Die Ausnehmungen 29 weisen in ihrem oberen Bereich eine Nut auf, in welchen jeweils ein Sicherungsring 30 einliegt. Mit diesem Sicherungsring 30 ist die Abdeckung 28 auf den Zapfen 24 und 25 und damit an dem Führungselement 11 und dem Verbindungselement 12 gehalten. Die Abdeckung 28 ist Bestandteil der Antriebsschwinge 2.

Die Abdeckung 28 begrenzt zudem die Führungsausnehmung 26 nach oben. Der Rastvorsprung 16 ist also in der Führungsausnehmung 26 zwischen dem Führungselement 11 und der Abdeckung 28 geführt beziehungsweise gehalten. Auch stützt sich die Spiralfeder 20 der Rückstellvorrichtung 19 an der Abdeckung 28 ab, um die Rückstellkraft auf das Rastelement 15 aufzubringen.

## Patentansprüche

1. Viergelenk-Koppelgetriebe (1) für eine Verstellvorrichtung, insbesondere eines Wastegates eines Abgasturboladers, mit einer mit einem Antrieb wirkverbundenen Antriebsschwinge (2), einer Abtriebsschwinge (3) und einer die Antriebsschwinge (2) und die Abtriebsschwinge (3) wirkverbindenden Koppel (4), **dadurch gekennzeichnet, dass** die Antriebsschwinge (2) ein mit dem Antrieb wirkverbundenes Führungselement (11) und ein der Koppel (4) zugeordnetes Verbindungselement (12) aufweist, wobei das Führungselement (11) und das Verbindungselement (12) in einer Verbindungslagerstelle (13) aneinander gelagert und in mindestens einer Fixierstellung mittels einer Fixiervorrichtung (14) zueinander festlegbar sind.

2. Viergelenk-Koppelgetriebe nach Anspruch 1, **dadurch gekennzeichnet, dass** Führungselement (11) und Verbindungselement (12) mittels der Fixiervorrichtung (14) außerhalb eines Freigabebereichs um eine Strecklage der Antriebsschwinge (3) festgelegt und/oder innerhalb des Freigabebereichs zueinander verlagerbar sind.

3. Viergelenk-Koppelgetriebe nach einem der vorhergehenden Ansprüche, **dadurch gekennzeichnet, dass** die Fixiervorrichtung (14) mindestens ein Rastelement (15) aufweist, welches mit einem Rastgegenelement (18) zusammenwirkt, wobei das Rastelement (15) vorzugsweise an dem Verbindungselement (12) und das Rastgegenelement (18) an dem Führungselement (11) angeordnet sind.

4. Viergelenk-Koppelgetriebe nach einem der vorhergehenden Ansprüche, **dadurch gekennzeichnet, dass** das Rastelement (15) in seiner Axialrichtung verlagerbar ist.

5. Viergelenk-Koppelgetriebe nach einem der vorhergehenden Ansprüche, **dadurch gekennzeichnet, dass** dem Rastelement (15) eine Rückstellvorrichtung (19) zugeordnet ist, die eine das Rastelement (15) in seine Rastposition drängende Rückstellkraft bewirkt.

6. Viergelenk-Koppelgetriebe nach einem der vorhergehenden Ansprüche, **dadurch gekennzeichnet, dass** die Fixiervorrichtung (14) von der Koppel (4) betätigbar ist.

7. Viergelenk-Koppelgetriebe nach einem der vorhergehenden Ansprüche, **dadurch gekennzeichnet, dass** die Fixiervorrichtung (14) einen Anschlag (22) für die Koppel (4) aufweist.

8. Viergelenk-Koppelgetriebe nach einem der vorhergehenden Ansprüche, **dadurch gekennzeichnet, dass** das Verbindungselement (12) und die Koppel (4) in einer Koppellagerstelle (7) aneinandergelagert sind, wobei die Koppellagerstelle (7) einen größeren Hebelabstand von der Antriebslagerstelle (9) aufweist als die Verbindungslagerstelle (13).

9. Viergelenk-Koppelgetriebe nach einem der vorhergehenden Ansprüche, **dadurch gekennzeichnet, dass** eine Auslenkungsbegrenzungsvorrichtung (23) vorgesehen ist, die eine maximale Auslenkung der Koppel (4) festlegt.

10. Abgasturbolader mit einem Wastegate und einer Verstelleinrichtung zum Verstellen des Wastegates, wobei die Verstelleinrichtung ein Viergelenk-Koppelgetriebe (1), insbesondere nach einem oder mehreren der vorhergehenden Ansprüche, mit einer mit einem Antrieb wirkverbundenen Antriebsschwinge (2), einer Abtriebsschwinge (3) und einer die Antriebsschwinge (2) und die Abtriebsschwinge (3) wirkverbindenden Koppel (4), aufweist, **dadurch gekennzeichnet, dass** die Antriebsschwinge (2) ein mit dem Antrieb wirkverbundenes Führungselement (11) und ein der Koppel (4) zugeordnetes Verbindungselement (12) aufweist, wobei das Führungselement (11) und das Verbindungselement (12) in einer Verbindungslagerstelle (13) aneinander gelagert und in mindestens einer Fixierstellung mittels einer Fixiervorrichtung (14) zueinander festlegbar sind.

## Claims

1. Four-joint coupling gear (1) for an adjustment apparatus, in particular of a wastegate of an exhaust-gas turbocharger, having a driving link (2) operatively connected to a drive, having an output link (3), and having a coupler (4) that operatively connects the driving link (2) and the output link (3), **characterized in that** the driving link (2) has a control element (11) operatively connected to the drive and has a connecting element (12) assigned to the coupler (4), wherein the control element (11) and the connecting element (12) are mounted on one another at a connecting bearing point (13) and can be fixed with respect to one another in at least one fixing position by means of a fixing apparatus (14).

2. Four-joint coupling gear according to Claim 1, **characterized in that** the control element (11) and connecting element (12) are fixed by means of the fixing apparatus (14) outside an enable region around a stretched-out position of the driving link (2), and/or are displaceable relative to one another within the enable region.

3. Four-joint coupling gear according to one of the preceding claims, **characterized in that** the fixing apparatus (14) has at least one detent element (15) which interacts with a counterpart detent element (18), wherein the detent element (15) is preferably arranged on the connecting element (12) and the counterpart detent element (18) is arranged on the control element (11).

4. Four-joint coupling gear according to one of the preceding claims, **characterized in that** the detent element (15) is displaceable in its axial direction.

5. Four-joint coupling gear according to one of the preceding claims, **characterized in that** the detent element (15) is assigned a restoring apparatus (19) which imparts a restoring force that forces the detent element (15) into its detent position.

6. Four-joint coupling gear according to one of the preceding claims, **characterized in that** the fixing apparatus (14) can be actuated by the coupler (4).

7. Four-joint coupling gear according to one of the preceding claims, **characterized in that** the fixing apparatus (14) has a stop (22) for the coupler (4).

8. Four-joint coupling gear according to one of the preceding claims, **characterized in that** the connecting element (12) and the coupler (4) are mounted on one another at a coupler bearing point (7), wherein the coupler bearing point (7) has a greater lever distance from the drive bearing point (9) than the connecting bearing point (13).

9. Four-joint coupling gear according to one of the preceding claims, **characterized in that** a deflection limiting apparatus (23) is provided which defines a maximum deflection of the coupler (4).

10. Exhaust-gas turbocharger having a wastegate and having an adjustment device for adjustment of the wastegate, wherein the adjustment device has a four-joint coupling gear (1) in particular according to one or more of the preceding claims, having a driving link (2) operatively connected to a drive, having an output link (3), and having a coupler (4) that operatively connects the driving link (2) and the output link (3), **characterized in that** the driving link (2) has a control element (11) operatively connected to the drive and has a connecting element (12) assigned to the coupler (4), wherein the control element (11) and the connecting element (12) are mounted on one another at a connecting bearing point (13) and can be fixed with respect to one another in at least one fixing position by means of a fixing apparatus (14).

## Revendications

1. Engrenage couplé à quatre articulations (1) pour un dispositif de réglage, en particulier d'une vanne des gaz brûlés d'un turbocompresseur à gaz d'échappement, avec une manivelle oscillante d'entraînement (2) en liaison active avec un entraînement, une manivelle oscillante de sortie (3) et une bielle (4) reliant activement la manivelle oscillante d'entraînement (2) et la manivelle oscillante de sortie (3), **caractérisé en ce que** la manivelle oscillante d'entraînement (2) présente un élément de guidage (11) relié activement à l'entraînement et un élément de liaison (12) associé à la bielle (4), dans lequel l'élément de guidage (11) et l'élément de liaison (12) sont articulés l'un à l'autre en un point d'articulation, de liaison (13) et peuvent être calés l'un par rapport à l'autre dans au moins une position de fixation au moyen d'un dispositif de fixation (14).

2. Engrenage couplé à quatre articulations selon la revendication 1, **caractérisé en ce que** l'élément de guidage (11) et l'élément de liaison (12) sont calés au moyen du dispositif de fixation (14) à l'extérieur d'une plage de libération autour d'une position d'extension de la manivelle oscillante d'entraînement (2) et/ou sont déplaçables l'un par rapport à l'autre à l'intérieur de la plage de libération.

3. Engrenage couplé à quatre articulations selon l'une quelconque des revendications précédentes, **caractérisé en ce que** le dispositif de fixation (14) présente au moins un élément d'encliquetage (15), qui coopère avec un contre-élément d'encliquetage (18), dans lequel l'élément d'encliquetage (15) est de préférence disposé sur l'élément de liaison (12) et le contre-élément d'encliquetage (18) sur l'élément de guidage (11).

4. Engrenage couplé à quatre articulations selon l'une quelconque des revendications précédentes, **caractérisé en ce que** l'élément d'encliquetage (15) est déplaçable dans sa direction axiale.

5. Engrenage couplé à quatre articulations selon l'une quelconque des revendications précédentes, **caractérisé en ce qu'**un dispositif de rappel (19) est associé à l'élément d'encliquetage (15), et produit une force de rappel qui pousse l'élément d'encliquetage (15) dans sa position d'encliquetage.

6. Engrenage couplé à quatre articulations selon l'une quelconque des revendications précédentes, **caractérisé en ce que** le dispositif de fixation (14) peut être actionné par la bielle (4).

7. Engrenage couplé à quatre articulations selon l'une quelconque des revendications précédentes, **caractérisé en ce que** le dispositif de fixation (14) présente une butée (22) pour la bielle (4).

8. Engrenage couplé à quatre articulations selon l'une quelconque des revendications précédentes, **caractérisé en ce que** l'élément de liaison (12) et la bielle (4) sont articulés l'un à l'autre en un point d'articulation de bielle (7), dans lequel le point d'articulation de bielle (7) présente un plus grand bras de levier par rapport au point d'articulation d'entraînement (9) que par rapport au point d'articulation de liaison (13).

9. Engrenage couplé à quatre articulations selon l'une quelconque des revendications précédentes, **caractérisé en ce qu'**il est prévu un dispositif de limitation de déviation (23), qui fixe une déviation maximale de la bielle (4).

10. Turbocompresseur à gaz d'échappement avec une vanne à gaz brûlés et un dispositif de réglage pour le réglage de la vanne à gaz brûlés, dans lequel le dispositif de réglage présente un engrenage couplé à quatre articulations (1), en particulier selon une ou plusieurs des revendications précédentes, avec une manivelle oscillante d'entraînement (2) en liaison active avec un entraînement, une manivelle oscillante de sortie (3) et une bielle (4) reliant activement la manivelle oscillante d'entraînement (2) et la manivelle oscillante de sortie (3), **caractérisé en ce que** la manivelle oscillante d'entraînement (2) présente un élément de guidage (11) en liaison active avec l'entraînement et un élément de liaison (12) associé à la bielle (4), dans lequel l'élément de guidage (11) et l'élément de liaison (12) sont articulés l'un à l'autre en un point d'articulation de liaison (13) et peuvent être calés l'un par rapport à l'autre dans au moins une position de fixation au moyen d'un dispositif de fixation (14).
